# DEMANDE DE BREVET EUROPEEN

(11) **EP 2 492 827 A1**
(43) Date de publication de la demande: **29.08.2012**
(21) Numéro de dépôt: 12154643.6
(22) Date de dépôt: 09.02.2012
(51) Int. Cl.: G06F 17/30

(54) **Procédé et dispositif d'enrichissement d'une base de données d'informations personnelles**

(30) Priorité: 25.02.2011 FR 1151567
(71) Demandeur: France Telecom, 75015 Paris (FR)
(72) Inventeur: Bailly, Marc, 22560 Trebeurden (FR); Seureau, Cédric, 22300 Lannion (FR)

(57) **Abrégé**

L'invention concerne un procédé et dispositif d'enrichissement d'une base de données d'informations personnelles.

Un objet de l'invention est un procédé d'enrichissement d'une base de données d'informations personnelles, ladite base de données d'informations personnelles BDD_IP permettant d'enregistrer au moins un élément standard Ei dans un champ standard CSi d'au moins une première information personnelle IP_α. Le procédé d'enrichissement comporte une recherche SRCH de données dans au moins une autre base de données BDD+1, BDD+2... BDD+λ... BDD+L, ladite recherche SRCH étant apte à produire en fonction au moins d'un élément standard Ei d'une deuxième information personnelle IP_β au moins une donnée *d* comportant au moins un élément standard Ei apte à être enregistré dans un champ standard CSi d'une première information personnelle IP_α.

Ainsi, lorsque l'utilisateur U indique « RdV Garage » dans l'objet de son information personnelle sans précisez quel garage dans les participants à l'évènement correspondant à cette information personnelle, le procédé d'enrichissement ira rechercher, notamment dans la base de données des historiques d'appels et/ou dans la base de données constitué par le carnet d'adresse de l'utilisateur U et/ou dans les bases de données de SMS et/ou courriers électroniques, de quel garage il peut s'agir.

## Description

L'invention concerne un procédé et dispositif d'enrichissement d'une base de données d'informations personnelles. En particulier, l'invention concerne un procédé et dispositif d'enrichissement d'un agenda électronique.

Un agenda électronique permet à son utilisateur de gérer son emploi du temps et notamment ses tâches à accomplir. Pour cela, l'utilisateur créera dans l'agenda une information personnelle décrite par plusieurs éléments standards tels que l'objet, le lieu, des participants, une date et une durée. L'information personnelle d'un agenda correspondant à un évènement de la vie de l'utilisateur, celle-ci est généralement nommée évènement par abus de langage. L'utilisateur devra renseigner les champs correspondant à chacun des éléments utiles à la réalisation de l'évènement au fur et à mesure qu'il les obtiendra, voire devra les rechercher.

Notamment, si l'utilisateur a rendez vous avec ses amis Alice et Bob à 18h pour aller au cinéma « La Toile », rue des Frères Lumières à Paris, l'utilisateur créera une information personnelle ayant pour objet « Cinéma » et à la date du jour avec une heure de début « 18h ». S'il veut permettre aux personnes avec qui il est en relation, de lui fixer un rendez vous plus tard dans la soirée, par exemple pour prendre un verre ensemble, il faut qu'il indique la durée de cet évènement cinéma ou une heure de fin pour réduire les risques de conflits d'agenda. En outre, il devra indiquer les participants Alice et Bob afin que s'il est en retard où s'il souhaite les joindre avant le rendez vous pour convenir du film qu'ils vont aller voir, il puisse les joindre facilement soit parce que son agenda est relié à son carnet d'adresse et permet d'accéder facilement aux coordonnées de ces personnes, soit parce qu'il bénéficie d'un service de type « Communiquer sur simple clic », plus communément nommé clic-to-call, sur son agenda relié à son carnet d'adresse.

En particulier, lorsqu'un utilisateur échange par email avec un interlocuteur, qu'ils décident de poursuivre leur échange lors d'une réunion et se donnent rendez-vous, l'utilisateur devra ainsi ressaisir les éléments de l'information personnelle « rendez-vous » dans son agenda électronique et le renvoyer à son interlocuteur pour qu'il valide à nouveau le « rendez-vous » afin que cette information personnelle apparaisse dans l'agenda de l'utilisateur et celui de son interlocuteur.

Généralement, un utilisateur omet de remplir certains champs de ladite information personnelle tels que le champ "lieu" par exemple. Notamment, après avoir appelé son garagiste et convenu d'un rendez vous, il saisira la date et l'heure de l'information personnelle et indiquera « Garage » dans le champ objet mais ne saisira pas le lieu. Or, s'il se rend compte en saisissant une nouvelle information personnelle dans son agenda qu'il a besoin d'annuler son rendez vous « Garage », il devra rechercher par ailleurs le numéro de téléphone du garage. Or, s'il avait saisi « Garage » dans le champ lieu, son agenda étant associé à son carnet adresse, il lui aurait permis de rappeler le garage en question par simple clic-to-call.

Un des buts de la présente invention est de remédier à des inconvénients de l'état de la technique et d'apporter des améliorations.

Un objet de l'invention est un procédé d'enrichissement d'une base de données d'informations personnelles, ladite base de données d'informations personnelles permettant d'enregistrer au moins un élément standard dans un champ standard d'au moins une première information personnelle. Le procédé d'enrichissement comporte une recherche de données dans au moins une autre base de données, ladite recherche étant apte à produire en fonction au moins d'un élément standard d'une deuxième information personnelle au moins une donnée comportant au moins un élément standard apte à être enregistré dans un champ standard d'une première information personnelle.

Ainsi, lorsque l'utilisateur indique « RdV Garage » dans l'objet de son information personnelle sans préciser quel garage dans les participants à cet évènement, le procédé d'enrichissement ira rechercher, notamment dans la base de données des historiques d'appels et/ou dans la base de données constitué par le carnet d'adresse de l'utilisateur, de quel garage il peut s'agir. Le résultat de cette recherche pourra être ensuite enregistré dans les participants de cet évènement permettant ainsi l'utilisation de service associé à l'agenda tel qu'un service de clic to call lorsque l'utilisateur à besoin de se mettre en lien avec le garage au sujet de cet évènement, ou un service de navigation permettant de guider l'utilisateur vers cet évènement.

Avantageusement, le procédé d'enrichissement comporte au moins une analyse des données produites par la recherche en fonction d'au moins une donnée de contexte dc associée audit utilisateur permettant de sélectionner parmi les données produites par ladite recherche au moins une donnée.

Ainsi, lorsque la recherche produit plusieurs résultats, le résultat le plus probable peu être sélectionné pour être enregistré ou une liste organisée des résultats (du plus probables au moins probables) peut être proposée à l'utilisateur pour valider le résultat à enregistrer dans l'information personnelle. Par exemple, si la recherche concernant « De quel garage il s'agit ? » comporte plusieurs résultats, le garage enregistré dans le carnet d'adresse, plusieurs garages avec lequel l'utilisateur a communiqué, et si le rendez vous est proche dans le temps, la localisation actuelle de l'utilisateur permet, par exemple, de sélectionner le garage le plus proche de cette localisation dans les résultats.

Avantageusement, ladite recherche est effectuée dans au moins une base de données de communication.

Ainsi, les résultats sont reliés au contexte de communication de l'utilisateur : carnet d'adresses, participants et contenus des SMS échangés, participants aux appels échangés, fréquence d'interactions avec les contacts, localisation, lieux précédemment visités, etc.

Avantageusement, ladite recherche est effectuée dans au moins une base de données associée à un dispositif de fourniture de service.

Ainsi, les résultats permettent de fournir dans l'agenda un service, tel que, si l'information personnelle a pour objet cinéma, le service cinéma auquel est abonné l'utilisateur peut fournir comme résultat les programmations pour la salle habituelle de l'utilisateur dans son information personnelle. ou encore, si l'information personnelle indique comme lieu « rue des Frères lumières, paris » et que l'utilisateur est abonné à un service culturel, celui-ci peut ajouter après l'information personnelle « cinéma », une information personnelle proposé à l'utilisateur par le service ayant pour objet un « vernissage » dans le même quartier.

Avantageusement, ledit procédé d'enrichissement comporte un enregistrement dudit au moins un élément standard de ladite donnée produite dans un champ standard d'une première information personnelle existant dans ladite base de données d'informations personnelles.

Ainsi, les résultats de la recherche viennent compléter les éléments déjà enregistrés dans l'information personnelle.

Avantageusement, ledit procédé d'enrichissement comporte un déclenchement d'une création dans ladite base de données d'informations personnelles d'une troisième information personnelle comportant dans un au moins un champ standard ledit au moins un élément standard de ladite au moins une données produite par ladite recherche.

Ainsi, les résultats de la recherche viennent ajouter une information personnelle. Par exemple, l'utilisateur convient par SMS d'un rendez vous avec son ami Bob. La recherche permet de récupérer dans le SMS les éléments pour créer une information personnelle dans l'agenda sans que l'utilisateur ou Bob n'ait à réitérer l'invitation faite par SMS par le biais de l'agenda.

Avantageusement, ladite deuxième information personnelle est constituée par la première information personnelle existant dans ladite base de données d'informations personnelles.

Ainsi, la recherche est effectuée en fonction d'éléments enregistrés dans une information personnelle de l'agenda permettant ainsi de compléter les éléments existants de l'agenda.

Avantageusement, ladite deuxième information personnelle est constituée par au moins un élément standard d'information personnelle capturé d'une saisie par ledit utilisateur sur une interface d'un gestionnaire d'informations personnelles comportant ladite base de données d'informations personnelles.

Ainsi, la recherche est effectuée en fonction des éléments d'une nouvelle information personnelle ou d'un nouvel élément d'une information personnelle existant dans l'agenda lors de leur capture d'une saisie par l'utilisateur.

Avantageusement, ladite deuxième information personnelle est constituée par au moins un élément standard d'information personnelle inclus dans un message échangé par ledit utilisateur via un dispositif de communication associé à un gestionnaire d'informations personnelles comportant ladite base de données d'informations personnelles.

Ainsi, lorsque l'utilisateur convient par email d'un rendez vous, les éléments d'informations personnelles inclus dans cet email sont utilisés par la recherche.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif d'enrichissement d'informations personnelles et étant conçus pour commander l'exécution des différentes étapes de ce procédé.

L'invention vise donc aussi un programme comprenant des instructions de code de programme pour l'exécution des étapes du procédé d'enrichissement lorsque ledit programme est exécuté par un processeur.

Un autre objet de l'invention est un dispositif d'enrichissement d'une base de données d'informations personnelles, ladite base de données d'informations personnelles permettant d'enregistrer au moins un élément standard dans un champ standard d'au moins une première information personnelle, **caractérisé en ce que** ledit dispositif d'enrichissement comporte des moyens de recherche de données dans au moins une autre base de données, lesdits moyens de recherche étant apte à produire en fonction au moins d'un élément standard d'une deuxième information personnelle au moins une donnée comportant au moins un élément standard apte à être enregistré dans un champ standard d'une première information personnelle.

Un objet de l'invention est encore un procédé de gestion d'informations personnelles, ledit procédé de gestion permettant d'enregistrer au moins un élément standard dans un champ standard d'au moins une première information personnelle d'une base de données d'informations personnelles associée à un utilisateur, **caractérisé en ce que** ledit procédé de gestion comporte une recherche de données dans au moins une autre base de données, ladite recherche étant apte à produire en fonction au moins d'un élément standard d'une deuxième information personnelle au moins une donnée comportant au moins un élément standard apte à être enregistré dans un champ standard d'une première information personnelle.

Avantageusement, ledit procédé de gestion comporte au moins une extraction d'au moins un élément standard d'au moins une donnée en langage naturel, ledit au moins un élément standard étant apte à être enregistré dans un champ standard d'une troisième information personnelle créée suite à une capture d'une saisie par ledit utilisateur de ladite au moins une donnée en langage naturel.

Ainsi, l'interface du gestionnaire peut se présenter sous la forme d'un bloc note ou post-it électronique. L'utilisateur saisira en langage naturel son rendez vous si le gestionnaire est un agenda, son contact si le gestionnaire est un carnet d'adresse...comme il les aurait écrites sur un bout de papier et le procédé de gestion en extraira les éléments standards d'informations personnelles pour les enregistrés dans les champs standards adéquats.

Avantageusement, selon une implémentation de l'invention, les différentes étapes du procédé de gestion selon l'invention sont mises en oeuvre par un logiciel ou programme d'ordinateur, ce logiciel comprenant des instructions logicielles destinées à être exécutées par un processeur de données d'un dispositif faisant partie d'un gestionnaire d'informations personnelles et étant conçus pour commander l'exécution des différentes étapes de ce procédé.

L'invention vise donc aussi un programme comprenant des instructions de code de programme pour l'exécution des étapes du procédé d'enrichissement selon l'une quelconque des revendications 9 ou 10 lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est en outre un gestionnaire d'informations personnelles associé à un utilisateur, ledit gestionnaire comportant une base de données d'informations personnelles permettant d'enregistrer au moins un élément standard dans un champ standard d'au moins une première information personnelle, **caractérisé en ce que** ledit gestionnaire comporte des moyens de recherche de données dans au moins une autre base de données, lesdits moyens de recherche étant apte à produire en fonction au moins d'un élément standard d'une deuxième information personnelle au moins une donnée comportant au moins un élément standard apte à être enregistré dans un champ standard d'une première information personnelle.

Les caractéristiques et avantages de l'invention apparaîtront plus clairement à la lecture de la description, faite à titre d'exemple, et des figures s'y rapportant qui représentent
- Figure 1, un schéma simplifié d'un procédé d'enrichissement d'une base de données d'informations personnelles selon l'invention,
- Figures 2a et 2b, des schémas simplifiés d'utilisation d'un procédé d'enrichissement d'une base de données d'informations personnelles, respectivement dans un cas général et dans le cas d'un exemple, selon l'invention,
- Figure 3, un schéma simplifié d'un procédé de gestion d'informations personnelles selon l'invention,
- Figure 4, un schéma simplifié d'un dispositif d'enrichissement d'une base de données d'informations personnelles selon l'invention,
- Figure 5, un schéma simplifié d'un gestionnaire d'informations personnelles selon l'invention.

Par information personnelle est entendue toute information relative à un utilisateur pouvant être gérée électroniquement tel qu'une information concernant un évènement dans l'agenda de l'utilisateur, un contact de l'utilisateur, une tâche à effectuer par l'utilisateur, un achat, etc.

Par élément standard d'une information personnelle est entendu tout élément d'information ayant un format prédéfini permettant d'enregistrer ledit élément standard dans un champ standard c'est-à-dire ayant un champ ayant une dimension prédéfinie et/ou un champ permettant l'enregistrement d'un format prédéfini d'élément (par exemple, une date, une adresse, une photo, un jingle sonore, etc.), et de manipuler tout les éléments standard de même format, notamment de les ordonner, les filtrer, etc.

Par gestionnaire d'informations personnelles est entendu tout dispositif électronique de gestion d'informations personnelles tels qu'un agenda électronique, un gestionnaire de tâche électronique, un carnet d'adresse électronique, une liste de course électronique, un PDA, etc. Les informations personnelles gérées par le gestionnaire d'informations personnelles sont stockées dans une base de données d'informations personnelles. Un gestionnaire d'information personnelles permet notamment :
- la création d'une nouvelle information personnelle dans la base de données d'informations personnelles,
- l'ajout d'un élément dans une information personnelle existant dans la base de données d'information personnelle,
- la modification, la suppression d'un élément voire d'une information personnelle dans la base d'information personnelle,
- une reproduction de tout ou partie des informations personnelles, voire de tout ou partie des éléments de tout ou partie des informations personnelles stockées dans la base de données d'informations personnelles, les informations personnelles reproduites pouvant être ordonnées suivant un ou plusieurs critères, en particulier, sur un ou plusieurs éléments standards d'informations personnelles,
- une utilisation d'au moins une information personnelle ou d'au moins un élément standard d'information personnelle par un procédé de fourniture de service, tel qu'un procédé d'appel automatique, en particulier sur simple clic communément appelé clic-to-call, un procédé de navigation, notamment GPS, etc.

Par capture d'une saisie d'une information personnelle ou d'un élément standard d'information personnelle est entendue une entrée textuelle, notamment par frappe sur un clavier ou écriture manuscrite sur un écran tactile, une entrée sonore notamment par prise de son microphonique, une entrée photo ou vidéo, notamment par une caméra, une entrée kinétique, notamment par une caméra ou des accélérateurs, etc.

Par autre base de données est entendu toutes bases de données autres que la base de données en cours d'enrichissement. L'autre base de données est notamment une base de données de l'utilisateur tel que son historique d'appels, son historique de messages voire y compris les contenus de ces messages (en particulier, SMS, email, messagerie instantanée, message vocaux, etc.), ou des bases de données d'un fournisseur de service tel qu'un annuaire, un agenda d'une localité, une billetterie, une base de données d'une agence de tourisme, etc. Cette autre base de données peut aussi être une base de données d'informations personnelles, par exemple si l'enrichissement concerne un agenda, une autre base de données utilisée pour l'enrichissement de l'agenda peut être un gestionnaire de tâches, un carnet d'adresse.

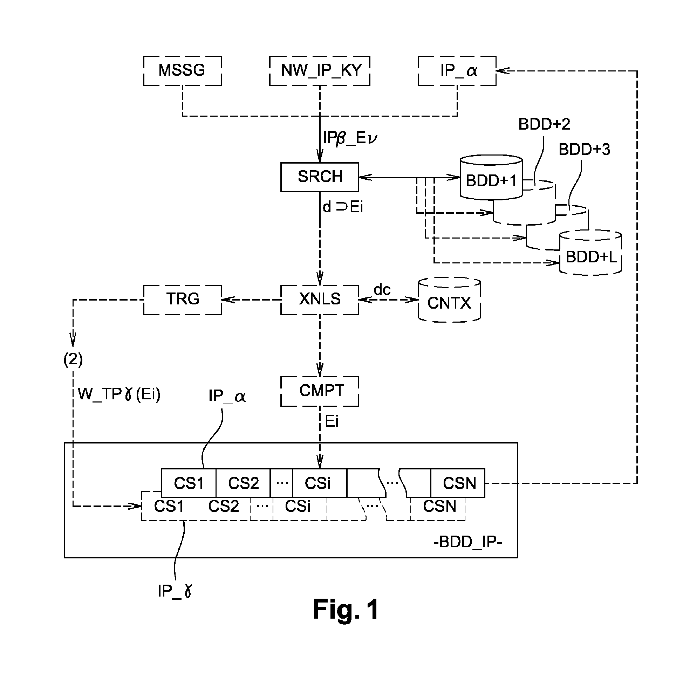

La figure 1 illustre un schéma simplifié d'un procédé d'enrichissement d'une base de données d'informations personnelles BDD_IP selon l'invention. La base de données d'informations personnelles BDD_IP permet d'enregistrer au moins un élément standard Ei dans un champ standard CSi d'au moins une première information personnelle IP_α. La première information personnelle IP_a comporte au moins un champ standard : CS1, CS2, ..., CSi, ... CSN comme le montre la figure 1.

Les informations personnelles stockées dans la base de données d'informations personnelles BDD_IP peuvent toutes comporter les mêmes champs standards. Par exemple, dans un agenda, les informations personnelles peuvent comporter toutes les mêmes champs standards « objet », « participant », « lieu », « date », « heures ». ou les informations personnelles stockées dans la base de données d'informations personnelles BDD_IP peuvent comporter toutes au moins un même champ standard CSi obligatoire, et de manières différentes au moins un champ standard CSi facultatif et/ou au moins un champ libre. Par exemple, dans un agenda, les informations personnelles peuvent toutes comporter les champs standards « date » et « heure », de manière facultative, un ou plusieurs des champs standards suivants « objet », « participant », « lieu », et/ou un ou plusieurs champs libres tels que « observation ».

Le procédé d'enrichissement comporte une recherche SRCH de données dans au moins une autre base de données BDD+1, BDD+2... BDD+λ.... BDD+L. La recherche SRCH produit, en fonction au moins d'un élément standard IP_Ev d'une deuxième information personnelle IP_β) au moins une donnée *d* comportant au moins un élément standard Ei apte à être enregistré dans le champ standard CSi de la première information personnelle IP_α.

L'élément standard Ei de la donnée *d* produite par la recherche SRCH est apte à être utilisé par un procédé de traitement, notamment un procédé de fourniture de service. Le procédé de traitement reçoit et/ou récupère d'un procédé de gestion d'informations personnelles l'élément standard Ei produit par la recherche SRCH et enregistré dans une base de données d'informations personnelles BDD_IP. Dans une alternative, la recherche SRCH transmet, éventuellement sur requête du procédé de traitement, l'élément standard Ei produit par la recherche SRCH.

La recherche SRCH est exécutée périodiquement en fonction des éléments standards de toutes les premières informations personnelles créées ou modifiées dans l'intervalle, et/ou à la demande de l'utilisateur U, et/ou à la demande d'un fournisseur de service d'enrichissement de base de données d'informations personnelles BDD_IP, et/ou déclenchée par la mise à jour d'une ou plusieurs des autres bases de données utilisées par la recherche SRCH, et/ou déclenchée par une capture d'une saisie de l'utilisateur U dans l'interface d'entrée d'un gestionnaire d'informations personnelles comportant la base de données d'informations personnelles BDD_IP.

En particulier, ladite deuxième information personnelle IP_β) est constituée par la première information personnelle IP_α existant dans ladite base de données d'informations personnelles BDD_IP. Ainsi, dans le cas d'un agenda comportant une information personnelle ayant comme éléments standards pour « objet » : « Déjeuner Marie », pour « date » : « 15/05/11 » et pour heure « 12h », une recherche SRCH sera, par exemple, effectué en fonction de l'élément standard « objet » : « Déjeuner Marie ».

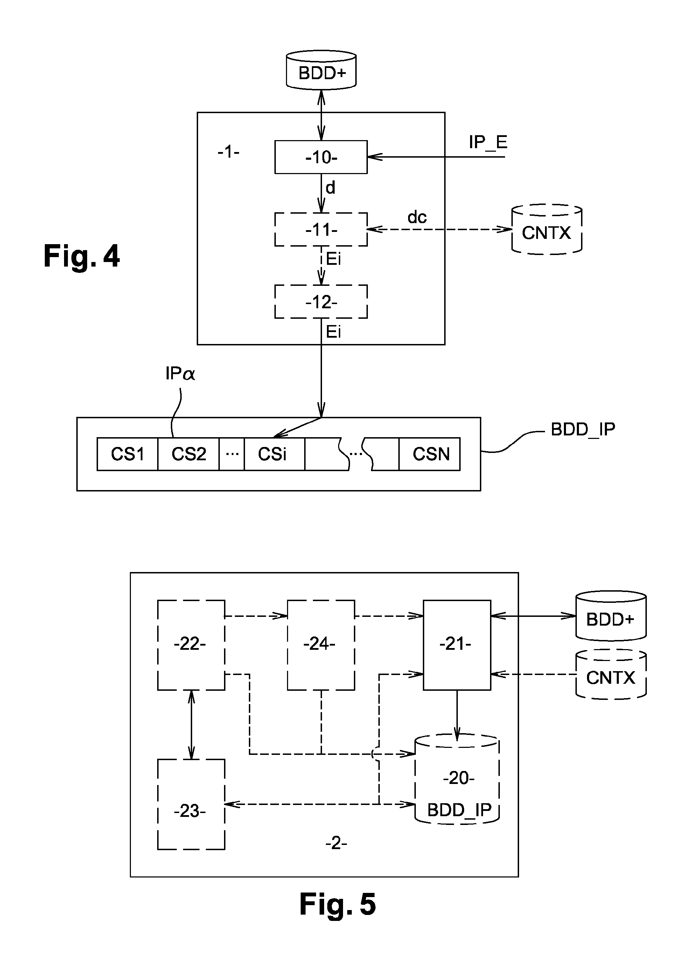

En particulier, la deuxième information personnelle IP_β) est constituée par au moins un élément standard Ev d'information personnelle capturé d'une saisie NW_IP KY par ledit utilisateur U sur une interface dudit gestionnaire d'informations personnelles (notamment l'interface d'entrée 22 dudit gestionnaire 2 illustré par la figure 5). Ainsi, dans le cas particulier d'un utilisateur U entrant, dans son agenda, un futur évènement sous la forme d'une nouvelle information personnelle ayant comme éléments standards pour « objet » : « Déjeuner Marie », pour « date » : « 15/05/11 » et pour heure « 12h », une recherche SRCH sera, par exemple, effectué en fonction de l'élément standard « objet » : « Déjeuner Marie ». Cela permettra lors de la création de la nouvelle information personnelle dans la base de données des informations personnelles de cet agenda, non seulement d'enregistrer les éléments standards saisis par l'utilisation « objet » : « Déjeuner Marie », pour « date » : « 15/05/11 » et pour heure « 12h » mais, éventuellement, aussi au moins un autre élément standard Ei produit par la recherche SRCH en fonction de l'élément standard « objet » : « Déjeuner Marie », notamment un ou plusieurs des éléments standards « Nom participant » : « Durand », « téléphone participant» : « 0685xxxxxx », « lieu » : « restaurant MIAMMIAM, rue de la soif, Paris », « téléphone lieu» : « 0145xxxxxx

En particulier, la deuxième information personnelle IP_β) est constituée par au moins un élément standard Ev d'information personnelle inclus dans un message MSSG échangé par ledit utilisateur U via un dispositif de communication (non illustré) associé audit gestionnaire 2 d'informations personnelles (notamment le gestionnaire 2 illustré par la figure 5). Ainsi, un utilisateur U échangeant avec un interlocuteur « Marie » par message MSSG, notamment par SMS, envoie un SMS « Je suis sur Paris le 15/05 pour un rendez vous professionnel l'après midi». Marie lui répond « Que dis tu de déjeuner ensemble ? » par SMS. L'utilisateur U envoie « OK, disons midi à notre restaurant habituel ». La recherche SRCH se fera en fonction d'au moins un des éléments standards « participant » : « Marie », « objet » : « Déjeuner ». Cela permettra soit l'ajout des éléments standards produits dans une information personnelle correspondant à cet échange de messages MSSG, soit la création d'une nouvelle information personnelle. Lors de la création de la nouvelle information personnelle dans la base de données des informations personnelles de cet agenda, non seulement d'enregistrer les éléments standards récupérés dans les messages MSSG échangés « objet » : « Déjeuner Marie », « date » : « 15/05/11 » et heure « 12h », « prénom participant » : « Marie » mais, éventuellement, aussi au moins un autre élément standard Ei produit par la recherche SRCH, notamment un ou plusieurs des éléments standards « Nom participant » : « Durand », « téléphone participant» : « 0685xxxxxx », « lieu » : « restaurant MIAMMIAM, rue de la soif, Paris », « téléphone lieu» : « 0145xxxxxx

En particulier, la recherche SRCH est effectuée dans au moins une base de données de communication BDD+1, BDD+2... BDD+λ.... BDD+L, c'est-à-dire une base de données en lien avec au moins un dispositif de communication (téléphone fixe ou mobile, ordinateur connecté à un réseau de communication, télévision ou set top box connectée à un réseau de communication, etc.) tel qu'un carnet d'adresses, des historiques d'appels, ou d'échanges, une base de données des contenus de messages MSSG échangés, etc.

Dans notre exemple du déjeuner avec Marie, les bases de données de communication utilisées comme autre base de données BDD+1, BDD+2... BDD+λ.... BDD+L sont notamment, la base de données des contenus de SMS échangés, le carnet d'adresse de l'utilisateur U, un annuaire téléphonique, etc.

En particulier la recherche SRCH est effectuée dans au moins une base de données associée à un dispositif de fourniture de service BDD+1, BDD+2... BDD+λ.... BDD+L, par exemple, une billetterie, un annuaire téléphonique, une base de données évènementielles, une base de données publicitaires, une base de données de fidélisation (comportant notamment des bons de réductions, des bons cadeaux, etc. associés à des commerces, spectacles, etc.), etc.

Dans notre exemple du déjeuner avec Marie, les autres bases de données utilisées comme base de données associée à un dispositif de fourniture de service sont notamment, un annuaire téléphonique, une base de données de réservation de restaurant, une base de données de localisation, etc.

En particulier, le procédé d'enrichissement comporte au moins une analyse XNLS des données *d* produites par la recherche SRCH en fonction d'au moins une donnée de contexte dc associée audit utilisateur U permettant de sélectionner parmi les données *d* produites par ladite recherche SRCH au moins un élément standard Ei.

En particulier, le procédé d'enrichissement comporte un enregistrement CMPT dudit au moins un élément standard Ei de ladite donnée *d* produite dans un champ standard CSi d'une première information personnelle IP_α existant dans ladite base de données d'informations personnelles BDD_IP.

En particulier, le procédé d'enrichissement comporte un déclenchement TRG d'une création dans ladite base de données d'informations personnelles BDD_IP d'une troisième information personnelle IP_γ comportant dans un au moins un champ standard CSi ledit au moins un élément standard Ei de ladite au moins une donnée *d* produite par ladite recherche SRCH.

Le procédé d'enrichissement peut être mis en oeuvre sous la forme d'un programme comprenant des instructions de code de programme pour l'exécution des étapes du procédé d'enrichissement lorsque ledit programme est exécuté par un processeur, notamment un processeur d'un dispositif d'enrichissement ou d'un gestionnaire 2 d'informations personnelles, ou de manière plus générale un processeur d'un terminal utilisateur U tel qu'un ordinateur, un PDA ou assistant personnel électronique, un téléphone mobile, ou encore un processeur d'un équipement d'un fournisseur de services permettant notamment un enrichissement d'une base de données d'informations personnelles BDD_IP ou un gestion d'informations personnelles.

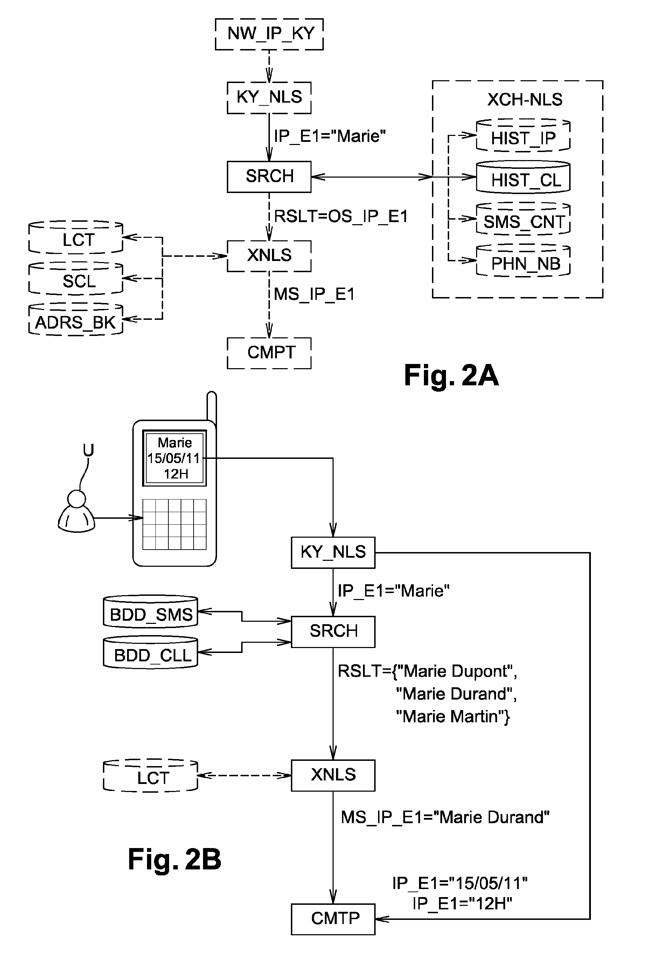

Les Figures 2a et 2b illustrent des schémas simplifiés d'utilisation d'un procédé d'enrichissement d'une base de données d'informations personnelles BDD_IP, respectivement dans un cas général et dans le cas d'un exemple, selon l'invention.

La figure 2a montre que la recherche SRCH est notamment effectuée suite à une capture d'une saisie KY par l'utilisateur U. La capture d'une saisie KY peut être une capture d'une saisie d'une nouvelle information personnelle : une troisième information personnelle ou la capture d'une saisie d'un nouvel et/ou d'une modification d'au moins un élément standard Ei d'une première information personnelle IP_α existante dans la base de données d'informations personnelles BDD_IP.

En particulier, cette capture d'une saisie KY peut être effectuée de manière formatée ou en langage naturel. Par formatée est entendUne capture d'une saisie de manière indépendante de chaque élément standard Ei dans le format adéquat à son enregistrement dans le champ standard CSi correspondant de l'information personnelle stockée dans la base de données d'informations personnelles BDD_IP.

En particulier, au moins une partie des données capturées en langage naturel ou sous forme d'éléments standards ou d'éléments libres est analysée KY_NLS pour en extraire au moins un élément standard Ei non identifié en tant que tel dans les données capturées.

Par exemple, si l'utilisateur U a saisi en langage naturel « Déjeuner Marie 15/05/11 » ou dans un élément standard Ei objet « Déjeuner Marie », l'analyse d'au moins une partie des données capturées permettra d'extraire un élément standard « participant » : IP_E1 = « Marie ».

La recherche SRCH sera alors effectuée en fonction au moins de cet élément standard IP_E1 = « Marie » résultant de l'analyse KY_NLS d'au moins une partie des données capturées dans au moins une autre base de données BDD+1, BDD+2... BDD+λ.... BDD+L.

En particulier, la recherche SRCH peut déclencher une comportant notamment une recherche SRCH dans plusieurs bases de données telles qu'un historique des contenus de SMS SMS_CNT, un annuaire inversé fixe et/ou mobile PHN_NB, un historique des appels HIST_CL, un historique des créations d'informations personnelles HIST_IP, etc. L'analyse des échanges XCH_NLS est notamment apte à détecter une corrélation entre la création et/ou la modification d'une information personnelle et un échange tel qu'un appel, un évènement SMS (par évènement SMS étant entendu un envoi ou une réception d'un SMS), etc. en particulier la création d'une information personnelle juste avant ou après un appel ou un SMS.

La ou les données produites par la recherche SRCH sont notamment un ou plusieurs éléments standards plausibles pour un champ standard CSis spécifique par exemple le champ standard CSi correspondant au « participant » RSLT= S_IP_E1, éventuellement ordonnés.

Dans le cas où plusieurs éléments standards plausibles sont produits par la recherche SRCH, il peut être envisagé de proposer cette liste ordonnée *d* à la validation de l'utilisateur U qui sélectionnera l'élément standard Ei à enregistrer dans le champ standard CSi correspondant (option non illustrée par les figures). Une alternative est notamment d'effectuer une analyse KY_NLS croisée XNLS en utilisant au moins une base de données de contexte de l'utilisateur U, notamment sa localisation courante et/ou la base de données de son historique de localisation LCT, une base de données d'un réseau social auquel il appartient SCL, un carnet d'adresse associé à l'utilisateur ADRS_BK. L'analyse croisée XNLS permet de sélectionner un élément standard MS_IP_E1 des données produites par la recherche SRCH.

L'élément standard MS_IP_E1 issu des données produites par la recherche SRCH est utilisé pour compléter l'information personnelle adéquate dans la base de données d'informations personnelles BDD_IP.

La figure 2b illustre l'exemple de l'utilisateur U convenant d'un rendez vous avec Marie le 15/05/11 à 12h. L'utilisateur U saisie sur le clavier de son téléphone mobile, l'information personnelle « Marie 15/05/11 12h » en langage naturel sur l'interface graphique, format post-it électronique, d'entrée de données dans l'agenda de son téléphone mobile. Ces données sont capturées NW_IP_KY.

L'analyse KY_NLS des données capturées en extrait plusieurs éléments standards : « participant» : IP_E1 = « Marie », « date » : IP_E2= « 15/05/11 », « heure » : IP_E3= « 12h ». Le premier élément standard IP_E1 = « Marie » est utilisé par la recherche SRCH pour rechercher dans la base de données de contenus SMS BDD_SMS et la base de données d'appel BDD_CLL la personne prénommée « Marie » qui participera à l'évènement faisant l'objet de cette nouvelle information personnelle.

La recherche SRCH produit une liste de résultat RST= {« Marie Dupond », « Marie Durand », « Marie Martin »}, l'utilisateur U ayant conversé téléphoniquement avec Marie Martin récemment et échangé dans les dernières 24h des SMS avec Marie Durand et Marie Dupond.

L'analyse croisée XNLS utilise la base de données de localisation LCT pour déterminé, aujourd'hui 14/05/11, où se situe l'utilisateur U. Marie Dupond et Marie Martin étant domicilié en région parisienne alors que Marie Durand habite la région bordelaise, l'utilisateur U étant actuellement en région bordelaise et la date de l'information personnelle étant proche, l'analyse croisée XNLS fournit comme résultat MS_IP_E1 = « Marie Durand ».

Ce résultat MS_IP_E1 = « Marie Durand » ainsi que les éléments standards : IP_E2= « 15/05/11 », et IP_E3= « 12h » issue de l'analyse KY_NLS des données capturées KY_NLS sont utilisés pour compléter CMPT la base de données des informations personnelles.

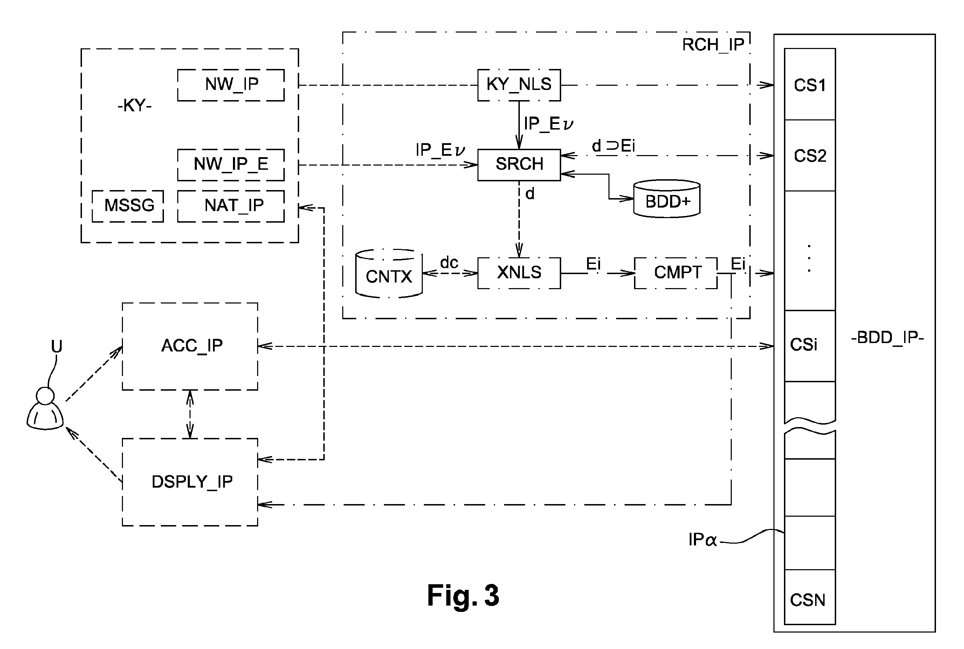

La figure 3 illustre un schéma simplifié d'un procédé de gestion d'informations personnelles selon l'invention. Le procédé de gestion d'informations personnelles permet d'enregistrer au moins un élément standard Ei dans un champ standard CSi d'au moins une première information personnelle IP_α d'une base de données d'informations personnelles BDD_IP associée à un utilisateur U. La première information personnelle IP_α comporte au moins un champ standard CSis CS1, CS2, ..., CSi, ... CSN comme le montre la figure 3.

Le procédé de gestion comporte une recherche SRCH de données dans au moins une autre base de données BDD+1, BDD+2... BDD+λ... BDD+L BDD+1. La recherche SRCH produit, en fonction au moins d'une deuxième information personnelle IP_β) au moins une donnée *d* comportant au moins un élément standard Ei apte à être enregistré dans le champ standard CSi de la première information personnelle IP_α.

En particulier, le procédé de gestion comporte une capture d'une saisie KY par l'utilisateur U d'au moins une donnée *d* comportant au moins un élément standard Ei d'une deuxième information personnelle IP_β). Cette capture KY est notamment une capture d'une saisie d'un message MSSG MSS, une capture d'une saisie d'au moins un élément standard d'une deuxième information personnelle IP_β) en langage naturel NAT_IP, une capture d'une saisie d'un nouvel élément standard d'une première information personnelle NW_IP_E existante dans la base de données des informations personnelles BDD_IP, une capture d'une saisie d'une deuxième information personnelle NW_IP. Ainsi, la recherche SRCH peut être effectuée aussi bien en fonction d'informations personnelles existantes dans la base de données d'informations personnelles BDD_IP d'informations personnelles capturées nouvelles et /ou modifiées quel que soit le formalisme de saisie : saisie formatée ou en langage naturel.

En particulier, au moins une partie des données capturées en langage naturel ou sous forme d'éléments standards ou d'éléments libres est analysée KY_NLS pour en extraire au moins un élément standard IP_Ev non identifié en tant que tel dans les données capturées.

En particulier, le procédé de gestion comporte au moins une extraction KY_NLS d'au moins un élément standard IP_Ev d'au moins une donnée *d* en langage naturel, ledit au moins un élément standard Ei étant apte à être enregistré dans un champ standard CSi d'une troisième information personnelle créée suite à une capture d'une saisie KY par ledit utilisateur U de ladite au moins une donnée en langage naturel.

La recherche SRCH sera alors effectuée en fonction au moins de cet élément standard Ei résultant de l'analyse KY_NLS d'au moins une partie des données capturées dans au moins une autre base de données BDD+1, BDD+2... BDD+λ.... BDD+L. En particulier, la recherche SRCH peut aussi être effectuée en fonction d'un élément libre capturé ou d'une donnée *d* capturée en langage naturel.

En particulier, le procédé de gestion comporte au moins une analyse KY_NLS XNLS des données *d* produites par la recherche SRCH en fonction d'au moins une donnée de contexte dc associée audit utilisateur U permettant de sélectionner parmi les données *d* produites par ladite recherche SRCH au moins un élément standard Ei.

En particulier, le procédé de gestion comporte un enregistrement CMPT dudit au moins un élément standard Ei de ladite donnée *d* produite dans un champ standard CSi d'une première information personnelle IP_α existant dans ladite base de données d'informations personnelles BDD_IP.

En particulier, le procédé de gestion comporte un procédé d'enrichissement RCH_IP comportant au moins une recherche SRCH et, éventuellement, tout ou partie des étapes suivantes :
u ne analyse KY_NLS des données capturées préalablement à la recherche SRCH,
u ne analyse croisée XNLS suite à la recherche SRCH,
u n enregistrement CMPT d'un élément standard Ei issue des données produites par la recherche SRCH dans la base de données d'informations personnelles BDD_IP.

En particulier, le procédé de gestion comporte une création (non illustrée) dans ladite base de données d'informations personnelles BDD_IP d'une troisième information personnelle IP_γ comportant dans un au moins un champ standard CSi ledit au moins un élément standard Ei de ladite au moins une données *d* produite par ladite recherche SRCH.

En particulier, le procédé de gestion comporte un accès ACC_IP à au moins une information personnelle de la base de données des informations personnelles BDD_IP.

En particulier, le procédé de gestion comporte une reproduction DSPLY_IP d'au moins une information personnelle de la base de données des informations personnelles BDD_IP, notamment lors d'un accès ACC_IP à une première information personnelle IP_α, la reproduction de cette information personnelle, ou la reproduction d'une première information personnelle IP_α lors de la capture KY de données concernant cette première information personnelle IP_α, ou encore, la reproduction d'une première information personnel suite à l'enregistrement CMPT d'un élément standard Ei issu de données produites par la recherche SRCH.

Le procédé de gestion peut être mis en oeuvre sous la forme d'un programme comprenant des instructions de code de programme pour l'exécution des étapes du procédé de gestion lorsque ledit programme est exécuté par un processeur, notamment un processeur d'un gestionnaire 2 d'informations personnelles, ou de manière plus générale un processeur d'un terminal utilisateur tel qu'un ordinateur, un PDA ou assistant personnel électronique, un téléphone mobile, ou encore un processeur d'un équipement d'un fournisseur de services permettant une gestion d'informations personnelles.

Au moins l'une des différentes analyses effectuées par le procédé d'enrichissement et le procédé de gestion selon l'invention (une analyse KY_NLS des données capturées, et/ou une recherche SRCH et/ou une analyse des données produites par la recherche XNLS et/ou une analyse des échanges XCH_NLS) utilisent notamment des techniques d'analyse sémantique éventuellement couplée à des analyses de données de contexte afin d'identifier les éléments standards d'informations personnelles auxquelles l'utilisateur U pourrait faire référence. Les éléments standards enrichies sont notamment la localisation de l'évènement correspondant à l'information personnelle, les participants (en particulier leur coordonnées), l'objet, le ou les actions à mener, etc.

Les données de contextes utilisées sont notamment les dernières communications de l'utilisateur U et, en particulier, les interlocuteurs associés. Par dernières communications sont entendues les échanges sur un réseau de communication ayant eu lieu dans une période de temps prédéfinie précédent l'instant de déclenchement de la recherche SRCH.

À titre d'exemple, un utilisateur U ajoute « RdV Jean » dans l'élément standard « objet » d'une nouvelle information personnelle de son agenda. La recherche SRCH détermine en consultant un carnet d'adresse associé à l'utilisateur U que plusieurs contacts de ce carnet d'adresses dont le prénom est « Jean » « Jean Dupont » et « Jean Durand ». Soit la recherche SRCH, soit l'analyse des données produites par la recherche XNLS vérifie, à partir d'un contexte de communication, si l'utilisateur U a eu dernièrement une communication avec un interlocuteur prénommé « Jean » pour déterminer lequel de « Jean Dupont » et « Jean Durand » doit être enregistré comme élément standard « participant » dans l'information personnelle crée.

Un autre exemple d'utilisation de données de contexte de communication est un utilisateur U créant une information personnelle « RdV dentiste » dans son calendrier. La recherche SRCH consulte un carnet d'adresse de l'utilisateur U et détermine qu'aucun contact ne comporte le terme « dentiste » (ou proche de ce terme) dans ce carnet d'adresse. L'analyse des échanges XCH_NLS récupère les derniers numéros appelés (par exemple les 10 derniers ou les numéros appelés les dernières 24 heures), déclenche une recherche SRCH dans un annuaire inversé sur ces numéros appelés. La recherche SRCH détermine que, grâce aux données récupérés sur l'annuaire inversé associés aux derniers numéros appelés, que l'un des derniers numéros appelés est associé à un « dentiste », par exemple :
*Doe Jeanne (téléphone : 02962xxxx) Chirurgiens dentistes et docteurs en chirurgie dentaire 1 rue des remparts- 22xxx La Couronne*
Les données ainsi récupéré seront alors enregistré dans au moins un élément standard « participant », et/ou « lieu » de l'information personnelle crée.

Les données de contexte utilisées sont éventuellement la relation temporelle entre la dernière communication et la date et l'heure de l'ajout de l'événement dans le calendrier. Ainsi, la recherche SRCH détermine, lors de la création et/ou la modification d'une information personnelle, les communications et/ou échanges (tels que SMS, IM, etc.) en cours ou venant juste de se terminer (par juste étant entendu venant de se terminer dans un intervalle de temps prédéfini précédant l'instant de création et/ou de modification de l'information personnelle). La recherche SRCH produit alors comme résultats au moins une partie les données (numéro de téléphone, nom, adresse, etc.) associées à ces communications.

Les données de contextes utilisées sont, en particulier, un carnet d'adresses associé à l'utilisateur U ou à un terminal de l'utilisateur U. La recherche SRCH sélectionnera en fonction de l'élément standard Ei de la deuxième information personnelle IP_β) un ou plusieurs contacts du carnet d'adresse et produira comme résultats au moins une partie des données associés à ces contacts dans le carnet d'adresses, notamment les coordonnées du contact : numéros de téléphone et potentiellement coordonnées géographique. À titre d'exemple, si l'utilisateur U crée une nouvelle information personnelle ayant pour élément standard « objet » : « RdV garage » dans son agenda, la recherche SRCH vérifiera dans un carnet d'adresse de l'utilisateur U si un contact comporte le terme « garage » ou un terme voisin (par terme voisin est entendu non seulement les termes synonymes, les termes traduits dans une ou plusieurs langages cibles prédéfinies, les termes correspondant à une erreur de saisie prédéfinis, et.). Si la recherche SRCH trouve un contact, elle produira comme résultat au moins une partie des données associées à ce contact, par exemple un numéro de téléphone, une adresse email. La recherche SRCH ou éventuellement l'analyse des échanges XCH_NLS pourra recherche SRCH à partir de ces données des données supplémentaires telles que le nom complet, l'adresse, les heures d'ouvertures dans au moins une autre base de données BDD+1, BDD+2... BDD+λ.... BDD+L telle qu'un annuaire inversé. La produira comme alors résultat ou utre au moins une partie des données associées à ce contact, par exemple un numéro de téléphone, une adresse email, au moins une partie des données supplémentaires.

Les données de contextes utilisées sont, en particulier, des données telles que la fréquence des échanges, les modes d'échanges (synchrone, asynchrone, audio, vidéo, texte, etc.), voire les variations de fréquence des échanges ou de modes d'échanges issues d'une analyse des échanges XCH_NLS (communications voix, SMS/MMS, mails) de l'utilisateur U avec ses différents interlocuteurs permettant notamment d'identifier la proximité des différents interlocuteurs avec l'utilisateur U. Par exemple, lorsque l'utilisateur U crée une information personnelle comportant un élément standard « objet » : « RdV Jean » dans son agenda, que la recherche SRCH retrouve dans un carnet d'adresse de l'utilisateur U deux contacts : « Jean Dupont et « Jean Durand », l'analyse des échanges XCH_NLS permet de déterminer une fréquence des échanges avec Jean Dupond inférieure à la fréquence des échanges avec « Jean Durand » et fournir cette information à la recherche SRCH pour sélectionner l'un des deux contacts comme résultats ou ordonnées la liste de résultats produite par la recherche SRCH.

D'autres données de contexte dc utilisées sont, en particulier, les localisations récurrentes ainsi que la localisation actuelle de l'utilisateur U. À titre d'exemple, si l'utilisateur U crée une nouvelle information personnelle ayant pour élément standard « objet » : « RdV garage X» dans son agenda, la recherche SRCH récupèrera notamment d'un annuaire plusieurs « garage X » dans une zone géographique prédéfinie (par exemple dans un zone géographique définie par un rayon d'une distance prédéfinie autour du domicile et/ou du bureau et/ou de la localisation au moment de la création de l'information personnelle, dans le département du domicile et/ou du bureau et/ou de la localisation au moment de la création de l'information personnelle). Ainsi, la recherche SRCH pourra produite comme résultat soit la liste des « garages X » ordonnée du plus proche au plus éloigné d'un critère de proximité (domicile ou bureau ou localisation de l'utilisateur U au moment de la création de l'information ou lieu le plus fréquenté de manière générale ou le jour de la semaine correspondant à l'élément standard « date » associé à l'information personnelle, etc.), soit le « garage X » le plus proche en fonction de l'un des critères de proximité cités.

D'autres données de contexte peuvent venir compléter cette liste comme l'identification des personnes proches physiquement (par exemple, détecté grâce à la liaison Bluetooth) lors de la création de l'information personnelle.

La figure 4 illustre un schéma simplifié d'un dispositif d'enrichissement 1 d'une base de données d'informations personnelles BDD_IP selon l'invention. La base de données d'informations personnelles BDD_IP permet d'enregistrer au moins un élément standard Ei dans un champ standard CSi d'au moins une première information personnelle IP_α.Le dispositif d'enrichissement 1 comporte des moyens de recherche SRCH 10 de données dans au moins une autre base de données BDD+1, BDD+2... BDD+λ.... BDD+L BDD+. Les moyens de recherche SRCH 10 produisent en fonction au moins d'un élément standard Ei d'une deuxième information personnelle IP_β) IP_E au moins une donnée *d* comportant au moins un élément standard Ei apte à être enregistré dans un champ standard CSi d'une première information personnelle IP_α.

En particulier, le dispositif d'enrichissement 1 comporte au moins un analyseur 11 des données *d* produites par les moyens de recherche 10 en fonction d'au moins une donnée de contexte dc associée audit utilisateur U (par exemple d'une base de données de contexte CNTX) permettant de sélectionner parmi les données *d* produites par les moyens de recherche 10 au moins un élément standard Ei.

En particulier, le dispositif d'enrichissement 1 comporte un enregistreur 12 dudit au moins un élément standard Ei de ladite donnée *d* produite dans un champ standard CSi d'une première information personnelle IP_α existant dans ladite base de données d'informations personnelles BDD_IP.

La figure 5 illustre un schéma simplifié d'un gestionnaire 2 d'informations personnelles selon l'invention. Le gestionnaire 2 comportant une base de données d'informations personnelles 20, BDD_IP permettant d'enregistrer au moins un élément standard Ei dans un champ standard CSi d'au moins une première information personnelle IP_α. Le gestionnaire 2 comporte des moyens de recherche 21 de données dans au moins une autre base de données BDD+1, BDD+2... BDD+λ.... BDD+L. Les moyens de recherche 21 effectuent une recherche dans au moins une autre base de données BDD+1, BDD+2... BDD+λ.... BDD+L en fonction au moins d'un élément standard Ei d'une deuxième information personnelle IP_β) permettant de produire au moins une donnée *d* comportant au moins un élément standard Ei apte à être enregistré dans un champ standard CSi d'une première information personnelle IP_α.

En particulier, le gestionnaire 2 comporte une interface d'entrée 22 permettant notamment de capturer des données saisies par un utilisateur U quel que soient le format des données saisies : éléments standards, éléments libres, données en langage naturel, etc. les moyens de recherche 21 sont apte à effectuer une recherche SRCH en fonction d'au moins un élément standard Ei compris dans ces données capturées, voire aussi en fonction d'un élément libre et/ou d'une donnée *d* en langage naturelle.

En particulier, l'interface d'entrée 22 alimente en outre la base de données des informations personnelles 20.

En particulier, le gestionnaire 2 comporte un analyseur 24 de données capturées permettant d'extraire de données capturées notamment par l'interface d'entrée 22 quelque soit leur format au moins un élément standard Ei et de le fournir aux moyens de recherche 21.

En particulier, l'analyseur 24 de données capturées alimente en outre la base de données des informations personnelles 20.

En particulier, le gestionnaire 2 comporte un dispositif d'enrichissement 21 tel qu'illustré par la figure 4. Le dispositif d'enrichissement 21 reçoit ou récupère au moins un élément standard Ei auprès de l'interface d'entrée 22 et/ou de l'analyseur 24 de données capturées, et/ou de la base de données des informations personnelles 20. Les moyens de recherche 10 du dispositif d'enrichissement 21 effectuent une recherche SRCH en fonction d'au moins un élément standard Ei ainsi récupéré ou reçu dans une autre base de données BDD+1, BDD+2... BDD+λ... BDD+L BDD+.

En particulier, l'analyseur 11 des données produites par la recherche SRCH du dispositif d'enrichissement 21 utilisent la base de données de contexte CNTX.

En particulier, le dispositif de gestion comporte une interface de reproduction 23 apte à reproduire au moins une première information personnelle IP_α de la base de données des informations personnelles 20 à laquelle l'utilisateur U à demander accès ACC_IP par l'interface d'entrée 22 ou pour laquelle l'interface d'entrée 22 manipulée par l'utilisateur U et/ou le dispositif d'enrichissement 21 à demander une modification, et/ou des données saisies par l'utilisateur U sur l'interface d'entrée 22, etc.

L'invention vise aussi un support d'enrichissement et/ou un support de gestion. Les supports d'informations peuvent être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement CMPT magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

## Revendications

1. Procédé d'enrichissement d'une base de données d'informations personnelles, ladite base de données d'informations personnelles (20, BDD_IP) permettant d'enregistrer au moins un élément standard (Ei) dans un champ standard (CSi) d'au moins une première information personnelle (IP_α), **caractérisé en ce que** ledit procédé d'enrichissement comporte une recherche (SRCH) de données dans au moins une autre base de données (BDD+1, BDD+2... BDD+λ... BDD+L), ladite recherche (SRCH) étant apte à produire en fonction au moins d'un élément standard (Ei) d'une deuxième information personnelle (IP_β) au moins une donnée (*d*) comportant au moins un élément standard (Ei) apte à être enregistré dans un champ standard (CSi) d'une première information personnelle (IP_α).

2. Procédé d'enrichissement selon la revendication précédente, **caractérisé en ce que** ledit procédé d'enrichissement comporte au moins une analyse (KY_NLS) des données produites par la recherche (SRCH) en fonction d'au moins une donnée de contexte (dc) associée audit utilisateur (U) permettant de sélectionner parmi les données produites par ladite recherche (SRCH) au moins un élément standard (Ei).

3. Procédé d'enrichissement selon l'une quelconque des revendications précédentes, **caractérisé en ce que** ladite recherche (SRCH) est effectuée dans au moins une base de données de communication.

4. Procédé d'enrichissement selon l'une quelconque des revendications précédentes, **caractérisé en ce que** ladite recherche (SRCH) est effectuée dans au moins une base de données associé à un dispositif de fourniture de service.

5. Procédé d'enrichissement selon l'une quelconque des revendications précédentes, **caractérisé en ce que** ledit procédé d'enrichissement comporte un enregistrement (CMPT) dudit au moins un élément standard (Ei) de ladite donnée (*d*) produite dans un champ standard (CSi) d'une première information personnelle (IP_α) existant dans ladite base de données d'informations personnelles (20, BDD_IP).

6. Procédé d'enrichissement selon l'une quelconque des revendications précédentes, **caractérisé en ce que** ledit procédé d'enrichissement comporte un déclenchement (TRG) d'une création dans ladite base de données d'informations personnelles (20, BDD_IP) d'une troisième information personnelle comportant dans un au moins un champ standard (CSi) ledit au moins un élément standard (Ei) de ladite au moins une données produite par ladite recherche (SRCH).

7. Procédé d'enrichissement selon l'une quelconque des revendications précédentes, **caractérisé en ce que** ladite deuxième information personnelle (IP_β)) est constituée par la première information personnelle (IP_α) existant dans ladite base de données d'informations personnelles (20, BDD_IP).

8. Procédé d'enrichissement selon l'une quelconque des revendications précédentes, **caractérisé en ce que** ladite deuxième information personnelle (IP_β)) est constituée par au moins un élément standard (Ei) d'information personnelle capturée par ledit utilisateur (U) sur une interface d'entrée (22) d'un gestionnaire (2) d'informations personnelles comportant ladite base de données d'informations personnelles (20, BDD_IP).

9. Procédé d'enrichissement selon l'une quelconque des revendications précédentes, **caractérisé en ce que** ladite deuxième information personnelle (IP_β)) est constituée par au moins un élément standard (Ei) d'information personnelle inclus dans un message MSSG échangé par ledit utilisateur (U) via un dispositif de communication associé à un gestionnaire (2) d'informations personnelles comportant ladite base de données d'informations personnelles (20, BDD_IP).

10. Programme comprenant des instructions de code de programme pour l'exécution des étapes du procédé d'enrichissement selon l'une quelconque des revendications précédentes lorsque ledit programme est exécuté par un processeur.

11. Dispositif d'enrichissement d'une base de données d'informations personnelles, ladite base de données d'informations personnelles (20, BDD_IP) permettant d'enregistrer au moins un élément standard (Ei) dans un champ standard (CSi) d'au moins une première information personnelle (IP_α), **caractérisé en ce que** ledit dispositif d'enrichissement (1, 21) comporte des moyens de recherche (10) de données dans au moins une autre base de données (BDD+1, BDD+2... BDD+λ... BDD+L), lesdits moyens de recherche (10) étant apte à produire en fonction au moins d'un élément standard (Ei) d'une deuxième information personnelle (IP_β) au moins une donnée (*d*) comportant au moins un élément standard (Ei) apte à être enregistré dans un champ standard (CSi) d'une première information personnelle (IP_α).

12. Procédé de gestion d'informations personnelles, ledit procédé de gestion permettant d'enregistrer au moins un élément standard (Ei) dans un champ standard (CSi) d'au moins une première information personnelle (IP_α) d'une base de données d'informations personnelles (20, BDD_IP) associée à un utilisateur (U), **caractérisé en ce que** ledit procédé de gestion comporte une recherche (SRCH) de données dans au moins une autre base de données (BDD+1, BDD+2... BDD+λ... BDD+L), ladite recherche (SRCH) étant apte à produire en fonction au moins d'un élément standard (Ei) d'une deuxième information personnelle (IP_β) au moins une donnée (*d*) comportant au moins un élément standard (Ei) apte à être enregistré dans un champ standard (CSi) d'une première information personnelle (IP_α).

13. Procédé de gestion d'informations personnelles selon l'une quelconque des revendications précédentes, **caractérisé en ce que** ledit procédé de gestion comporte au moins une extraction d'au moins un élément standard (Ei) d'au moins une donnée (*d*) en langage naturel, ledit au moins un élément standard (Ei) étant apte à être enregistré dans un champ standard (CSi) d'une troisième information personnelle créée suite à une capture d'une saisie (KY) par ledit utilisateur (U) de ladite au moins une donnée (*d*) en langage naturel.

14. Programme comprenant des instructions de code de programme pour l'exécution des étapes du procédé d'enrichissement selon l'une quelconque des revendications 12 ou 13 lorsque ledit programme est exécuté par un processeur.

15. Gestionnaire d'informations personnelles associé à un utilisateur, ledit gestionnaire (2) comportant une base de données d'informations personnelles (20, BDD_IP) permettant d'enregistrer au moins un élément standard (Ei) dans un champ standard (CSi) d'au moins une première information personnelle (IP_α), **caractérisé en ce que** ledit gestionnaire (2) comporte des moyens de recherche (10) de données dans au moins une autre base de données (BDD+1, BDD+2... BDD+λ... BDD+L), lesdits moyens de recherche (10) étant apte à produire en fonction au moins d'un élément standard (Ei) d'une deuxième information personnelle (IP_β) au moins une donnée (*d*) comportant au moins un élément standard (Ei) apte à être enregistré dans un champ standard (CSi) d'une première information personnelle (IP_α).
